# EUROPEAN PATENT SPECIFICATION

(11) **EP 3 976 980 B1**
(45) Date of publication and mention of the grant of the patent: **15.04.2026**
(21) Application number: 20840437.6
(22) Date of filing: 10.06.2020
(51) Int. Cl.: F16C 29/00, F16C 33/04, F16C 29/02, F16C 17/02, F16C 17/04, F16C 17/10, F16C 32/02, F16C 33/12, F16C 33/14, F16H 55/06, F16H 57/04, E21B 4/00

(54) **LINEAR BEARING ASSEMBLY AND METHOD OF BEARING LOAD**
LINEARLAGERANORDNUNG UND VERFAHREN ZUM TRAGEN EINER LAST
ENSEMBLE DE PALIER LINÉAIRE ET MÉTHODE POUR SUPPORTER UNE CHARGE

(43) Date of publication of application: 06.04.2022
(73) Proprietor: XR Reserve LLC, Houston, TX 77056 (US)
(72) Inventor: PREVOST, Gregory, Spring, TX 77388 (US); KING, William, W., Houston, TX 77069 (US); MIESS, David, P., Spring, TX 77386 (US); REESE, Michael, R., Houston, TX 77068 (US)
(74) Representative: Hoffmann Eitle
(86) International application number: PCT/US2020/037048
(87) International publication number: WO 2021/011128

(56) References cited:
- WO-A1-2011/052231
- DE-A1- 102010 052 804
- US-A1- 2010 307 069
- US-A1- 2012 037 425
- US-A1- 2014 355 914
- US-A1- 2017 108 039
- US-A1- 2018 264 614
- US-A1- 2019 063 495
- US-A1- 2019 063 495
- US-B1- 10 060 192
- US-B2- 7 845 436

## Description

### CROSS-REFERENCE TO RELATED APPLICATIONS

The present application is Continuation-in-Part of U.S. Patent Application number 16/049,631 (pending), entitled "Roller Ball Assembly with Superhard Elements", filed on July 30, 2018. The present application is also a Continuation-in-Part of U.S. Patent Application number 16/425,758 (pending), entitled "Material Treatments for Diamond-on-Diamond Reactive Material Bearing Engagements, filed on May 29, 2019, which is itself a Continuation-in-Part of: United States Patent Application Nos. 16/049,588, filed on July 30, 2018, now issued as U.S. Patent No. 10,465,775; 16/049,608 (pending), filed on July 30, 2018; and 16/049,617 (pending) filed on July 30, 2018.

### FIELD

The present disclosure relates to linear bearings that include polycrystalline diamond bearing surfaces, to apparatus and systems including the same, and to methods of making and using the same.

### BACKGROUND

Linear bearings are employed in myriad applications including, but not limited to, machine tool ways, precision positioning tables, robotics, additive manufacturing printers, transfer shuttles, food processing equipment, and semi-conductor manufacturing. Linear bearings are typically in the form of slide bearings or roller ball guide bearings. Frequently, roller ball guide bearings are preferred because they typically offer a lower coefficient of friction in use.

Both slide bearings and roller ball guide bearings may be lubricated or non-lubricated. In many instances, non-lubricated linear bearings exhibit resistance to movement at start-up due to friction, which negatively affects the precision of movement. However, employing lubrication to reduce friction in linear bearings can create a need for ongoing maintenance. The lubrication can further become a trap for contamination.

Many prior art linear bearings use recirculating balls. Recirculating ball type bearings are capable of handling a reciprocating cylindrical shaft that may exhibit rotational movement in combination with linear reciprocation. Recirculating ball bearings require a high number of precision roller balls and complex ball travel channels to function properly. In linear bearings where the roller balls are the primary load bearing structure point, loading on the roller balls and against the opposing surface is problematic.

Some references that provide relevant background in relation to linear bearings are United States Patent Nos. 2,693,396; 3,603,652; 5,193,363; 4,428,627; 9,222,515; and 5,618,114.

When polycrystalline diamond (PCD) elements are used in moving parts, typically both the engagement surface and the opposing engagement surface are composed of polycrystalline diamond. This is, at least in part, because thermally stable polycrystalline diamond (TSP), either supported or unsupported by tungsten carbide, and polycrystalline diamond compact (PDC) have been considered as contraindicated for use in the machining of diamond reactive materials. Diamond reactive materials include metals, metal alloys, composites, hardfacings, coatings, or platings that contain more than trace amounts of diamond catalyst or solvent elements (also referred to as diamond solvent-catalysts or diamond catalyst-solvents) including iron, cobalt, nickel, ruthenium, rhodium, palladium, chromium, manganese, copper, titanium, or tantalum. Further, this prior contraindication of the use of polycrystalline diamond extends to so called "superalloys", including iron-based, cobalt-based and nickel-based superalloys containing more than trace amounts of diamond catalyst or solvent elements. At certain surface speeds in moving parts, load and attendant temperature generated, such as at a cutting tip, often exceeds the graphitization temperature of diamond (*i.e.*, about 700 °C), which can, in the presence of diamond catalyst or solvent elements, lead to rapid wear and failure of components. Without being bound by theory, the specific failure mechanism is believed to result from the chemical interaction of the carbon bearing diamond with the carbon attracting material that is being machined. An exemplary reference concerning the contraindication of polycrystalline diamond for diamond catalyst or solvent containing metal or alloy machining is U.S. Patent No. 3,745,623. The contraindication of polycrystalline diamond for machining diamond catalyst or diamond solvent containing materials has long caused the avoidance of the use of polycrystalline diamond in all contacting applications with such materials.

It would be desirable to have a linear bearing that exhibits a low coefficient of friction during use, has a long life, is less subject to point loading, is able to withstand contamination without an unacceptable increase in wear, and does not necessarily require lubrication.

US 2017/108039 A1 discloses an apparatus including a first member having a first bearing surface formed from a hard material (e.g., a diamond-based material, such as a polycrystalline diamond material), and a second member coupled to an input shaft to translate (e.g., rotate, slide, etc.) with respect to the first member. The second member has a second bearing surface formed from a hard material, and the second bearing surface is to bear against the first bearing surface. In embodiments of the disclosure, the first and second members can be for devices including, but not necessarily limited to: solenoids, generators and/or motors (e.g., out-runner radial flux generators, axial flux generators, radial flux generators/motors, roller vane motors, etc.), gearboxes, rotary data swivels, digital actuators, filters (e.g., inner rotating filters), valves (e.g., proportional valves), sensors (e.g., pressure differential sensors), and so forth.

WO 2011/052231 A1 discloses a guide apparatus for a machine tool including a guide unit that supports a movable member, a guide rail which is inserted into said guide unit, said guide rail having a guide surface extending along said guide rail, the press member that projects from a position displaced from the guide surface to a position to press the guide surface, said press member having a sliding guide surface that is capable of pressing the guide surface with regard to the movable member.

US 10, 060, 192 B1 discloses methods of making polycrystalline diamond compacts having substrates including bonding features thereon and polycrystalline diamond bodies including complementary configurations, as well as embodiments of polycrystalline diamond compacts made using the same.

### SUMMARY OF THE INVENTION

According to a first aspect of the present invention, there is provided bearing assembly, the assembly comprising: a linear bearing comprising a polycrystalline diamond bearing element, wherein the polycrystalline diamond bearing element has a polycrystalline diamond bearing surface; and an opposing component, the opposing component having an opposing bearing surface thereon, wherein the opposing bearing surface is a metal surface comprising a metal containing at least 2 weight percent of diamond solvent-catalyst based on a total weight of the metal; wherein the linear bearing is movably coupled with the opposing component such that the polycrystalline diamond bearing surface is engaged with the opposing bearing surface comprising the metal containing diamond solvent-catalyst.

According to a second aspect of the present invention, there is provided a method of bearing load, the method comprising: providing a linear bearing comprising a polycrystalline diamond bearing element, wherein the polycrystalline diamond bearing element has a polycrystalline diamond bearing surface; providing an opposing component having an opposing bearing surface thereon, wherein the opposing bearing surface is a metal surface comprising a metal containing at least 2 weight percent of diamond solvent-catalyst based on a total weight of the metal; and movably coupling the linear bearing with the opposing component such that the polycrystalline diamond bearing surface is engaged with the opposing bearing surface comprising the metal that contains the diamond solvent-catalyst.

### BRIEF DESCRIPTION OF THE DRAWINGS

So that the manner in which the features and advantages of the systems, apparatus, and/or methods of the present disclosure may be understood in more detail, a more particular description briefly summarized above may be had by reference to the embodiments thereof which are illustrated in the appended drawings that form a part of this specification. It is to be noted, however, that the drawings illustrate only various exemplary embodiments and are therefore not to be considered limiting of the disclosed concepts as it may include other effective embodiments as well.
FIG. 1A is a top view of a polycrystalline diamond bearing element.
FIG. 1B is a top view of a linear bearing having a plurality of polycrystalline diamond bearing elements thereon.
FIG. 1C is a side view of a polycrystalline diamond bearing element.
FIG. 1D is a side view of a linear bearing, having a plurality of polycrystalline diamond bearing elements thereon, engaged with an opposing bearing surface.
FIG. 2A is a top view of a linear bearing having a plurality of polycrystalline diamond bearing elements thereon.
FIG. 2B is a side view of the linear bearing of FIG. 2B engaged with an opposing bearing surface.
FIG. 3A depicts a linear bearing having polycrystalline diamond bearing elements on multiple surfaces thereof.
FIG. 3B depicts a linear bearing having polycrystalline diamond bearing elements on multiple surfaces thereof.
FIG. 4A depicts a linear bearing having polycrystalline diamond bearing elements on multiple surfaces thereof.
FIG. 4B is another view of the linear bearing of FIG. 4A.
FIG. 5A is a side view of a linear bearing, having a single row of polycrystalline diamond bearing elements thereon, engaged with an opposing engagement surface.
FIG. 5B is a top view of the linear bearing of FIG. 5A.
FIG. 6A is a side view of a linear bearing assembly having multiple rows of polycrystalline diamond bearing elements engaged with opposing engagement surfaces.
FIG. 6B is a top view of a portion of the linear bearing of FIG. 6A.
FIG. 7A is an end view of a cylindrical linear bearing assembly having multiple polycrystalline diamond bearing elements thereon engaged with an opposing engagement surface of a tubular.
FIG. 7B is a side, cross-sectional view of the linear bearing assembly of FIG. 7A.
FIGS. 8A-8E depict various embodiments of polycrystalline diamond bearing elements having different surface contours.
FIGS. 9A-9D depict a continuous sleeve bearing in accordance with the present disclosure.
FIGS. 10A-10D depict an open continuous sleeve bearing in accordance with the present disclosure.

Systems, apparatus, and methods according to present disclosure will now be described more fully with reference to the accompanying drawings, which illustrate various exemplary embodiments. Concepts according to the present disclosure may, however, be embodied in many different forms and should not be construed as being limited by the illustrated embodiments set forth herein. Rather, these embodiments are provided so that this disclosure will be thorough as well as complete and will fully convey the scope of the various concepts to those skilled in the art and the best and preferred modes of practice.

### DETAILED DESCRIPTION

Certain embodiments of the present disclosure include linear bearings that include polycrystalline diamond bearing surfaces, apparatus and systems that include such linear bearings, and methods of making and using such linear bearings. In some embodiments, the linear bearings disclosed herein are lubricated bearings. In other embodiments, the linear bearings disclosed herein are non-lubricated bearings.

The linear bearings disclosed herein include one or more polycrystalline diamond bearing elements thereon. Each polycrystalline diamond bearing element provides a diamond bearing surface (also referred to as an "engagement surface") of the linear bearing. Depending on the desired configuration, the diamond bearing surface may be a flat surface or a curved surface (*e.g*., concave or convex). In at least some embodiments, the diamond engagement surface is engaged with an opposing bearing surface (also referred to as an "opposing engagement surface"), where the opposing bearing surface is a diamond reactive material.

### Interfacing Polycrystalline Diamond with Diamond Reactive Materials

**In** some embodiments, the present disclosure provides for interfacing the contact between a diamond bearing surface of a linear bearing and an opposing bearing surface that includes a diamond solvent-catalyst surface. For example, the polycrystalline diamond surface may be positioned and arranged on or as a bearing surface in a linear bearing for sliding and/or rolling contact with the diamond solvent-catalyst surface. As used herein, "engagement surface" or "bearing surface" refers to the surface of a material or component (e.g., polycrystalline diamond or diamond reactive material) that is positioned and arranged within a linear bearing such that, in operation of the linear bearing, the "engagement surface" or "bearing surface" interfaces the contact between two components. In some embodiments, the diamond bearing surface disclosed herein is in direct contact with an opposing bearing surface (*i.e.*, boundary lubrication), without a fluid film therebetween. In some embodiments, a fluid film may develop (*i.e.*, hydrodynamic lubrication) between the diamond bearing surface and the opposing bearing surface such that the surfaces are not directly in contact with one another, but are engaged through the fluid film. In some aspects, the contact between the diamond bearing surface and opposing bearing surface is between (or a mixture of) direct contact and fluid film (*i.e.*, mixed boundary lubrication).

### Diamond Bearing Surface

In some embodiments, the polycrystalline diamond surfaces disclosed herein are surfaces of polycrystalline diamond elements that are coupled with or otherwise incorporated into or with a linear bearing. In some embodiments, the polycrystalline diamond elements are positioned to be flush with a surface of the linear bearing. In other embodiments, the polycrystalline diamond elements are positioned to be raised above the surface of the linear bearing. In other embodiments, the polycrystalline diamond elements are positioned to be recessed below the surface of the linear bearing. In some embodiments, the polycrystalline diamond elements are static relative to the surface of the linear bearing. In other embodiments, the polycrystalline diamond elements are movable (e.g., compliant) relative to the surface of the linear bearing. The polycrystalline diamond elements disclosed herein may be or include thermally stable polycrystalline diamond, either supported or unsupported by tungsten carbide, or polycrystalline diamond compact (PDC). In certain applications, the polycrystalline diamond elements disclosed herein have increased cobalt content transitions layers between the outer polycrystalline diamond surface and a supporting tungsten carbide slug. The polycrystalline diamond elements may be supported by tungsten carbide, or may be unsupported, "standalone" polycrystalline diamond elements that are mounted directly to a linear bearing. The polycrystalline diamond elements may by non-leached, leached, leached and backfilled, thermally stable, coated via chemical vapor deposition (CVD), or processed in various ways as known in the art.

In some embodiments, the engagement surfaces of the polycrystalline diamond elements disclosed herein are planar, convex, or concave. In some embodiments, the polycrystalline diamond elements have beveled edges. The polycrystalline diamond elements may have diameters as small as 3mm (about 1/8") or as large as 75mm (about 3"), depending on the application. Typically, the polycrystalline diamond elements have diameters between 8mm (about 5/16") and 25mm (about 1").

Although the polycrystalline diamond elements are most commonly available in cylindrical shapes, it is understood that the technology of the application may be practiced with polycrystalline diamond elements that are square, rectangular, oval, any of the shapes described herein with reference to the Figures, or any other appropriate shape known in the art.

The polycrystalline diamond elements may be arranged in any pattern, layout, spacing or staggering within the linear bearing to provide the desired interfacing of contact, without concern for the need for overlapping contact with polycrystalline diamond elements engagement surfaces on the opposing bearing surface. The polycrystalline diamond elements disclosed herein are, in some embodiments, not shaped to conform to the opposing bearing surface. The polycrystalline diamond elements disclosed herein are, in other embodiments, shaped to conform to the opposing bearing surface.

One performance criterion is that the polycrystalline diamond element is configured and positioned in such a way as to preclude any edge contact with the opposing bearing surface. In some aspects, the polycrystalline diamond elements are subjected to edge radius treatment.

In certain applications, the polycrystalline diamond, or at least the engagement surface thereof, is lapped or polished, optionally highly lapped or highly polished. Although highly polished polycrystalline diamond is used in at least some applications, the scope of this disclosure is not limited to highly polished polycrystalline diamond and includes polycrystalline diamond that is highly lapped or polished. As used herein, a surface is defined as "highly lapped" if the surface has a surface finish of 20µin (0.508µm) or about 20µin(0.508µm), such as a surface finish ranging from about 18 to about 22µin (0.4572 to about 0.5588µm). As used herein, a surface is defined as "polished" if the surface has a surface finish of less than about 10µin (0.254µm), or of from about 2 to about 10 µin (0.0508 to about 0.254µm). As used herein, a surface is defined as "highly polished" if the surface has a surface finish of less than about 2µin (0.0508µm), or from about 0.5µin (0.0127µm) to less than about 2µin (0.0508µm). In some aspects, the polycrystalline diamond engagement surfaces disclosed herein have a surface finish ranging from 0.5 µin to 40 µin (0.0127µm to 1.016 µm) , or from 2 µin to 30 µin (0.0508µm to 0.762µm), or from 5 µin to 20 µin (0.127µm to 0.508µm), or from 8 µin to 15 µin (0.2032µm to 0.381µm), or less than 20 µin (0.508µm), or less than 10 µin (0.254µm), or less than 2 µin (0.0508µm), or any range therebetween. Without being bound by theory, it is believed that polycrystalline diamond that has been polished to a surface finish of 0.5µin (0.0127µm) has a coefficient of friction that is about half of standard lapped polycrystalline diamond with a surface finish of 20-40µin (0.508- 1.016 µm). U.S. Patent Nos. 5,447,208 and 5,653,300 to Lund et al., provide disclosure relevant to polishing of polycrystalline diamond. As would be understood by one skilled in the art, surface finish, also referred to as surface texture or surface topography, is a characteristic of a surface as defined by lay, surface roughness, and waviness. Surface finish may be determined in accordance with ASME B46.1-2009. Surface finish may be measured with a profilometer, laser microscope, or with Atomic Force Microscopy, for example. In some embodiments, the opposing engaging surface has a surface finish of from 0.5 to 2,000 µin (0.0127 to 50.8 µm), or from 1 to 1,900 µin (0.0254 to 48.26 µm), or from 5 to 1,500 µin (0.127 to 38.1 µm), or from 10 to 1,200 µin (0.254 to 30.48 µm), or from 50 to 1,000 µin (1.27 to 25.4µm), or from 100 to 800 µin (2.54 to 20.32 µm), or from 200 to 600 µin (5.08 to 15.24 µm). In some embodiments, the opposing engagement surface has a surface finish that is greater than the engagement surface (*i.e.*, rougher).

### Opposing Engagement Surface

The opposing bearing surface is a surface of a diamond reactive material. As used herein, a "diamond reactive material" is a material that contains more than trace amounts of diamond catalyst or diamond solvent, which are also referred to as "diamond catalyst-solvent,", "catalyst-solvent," "diamond solvent-catalyst," or "solvent-catalyst." Some examples of known solvent-catalysts are disclosed in: U.S. Patent No. 6,655,845; U.S. Patent No. 3,745,623; U.S. Patent No. 7,198,043; U.S. Patent No. 8,627,904; U.S. Patent No. 5,385,715; U.S. Patent No. 8,485,284; U.S. Patent No. 6,814,775; U.S. Patent No. 5,271,749; U.S. Patent No. 5,948,541; U.S. Patent No. 4,906,528; U.S. Patent No. 7,737,377; U.S. Patent No. 5,011,515; U.S. Patent No. 3,650,714; U.S. Patent No. 2,947,609; and U.S. Patent No. 8,764,295. As used herein, a diamond reactive material that contains more than "trace amounts" of diamond catalyst or diamond solvent, is a material that contains at least 2 percent by weight (wt.%) diamond catalyst or diamond solvent based on a total weight of the diamond reactive material. In some aspects, the diamond reactive materials disclosed herein contain from 2 to 100 wt.%, or from 5 to 95 wt.%, or from 10 to 90 wt.%, or from 15 to 85 wt.%, or from 20 to 80 wt.%, or from 25 to 75 wt.%, or from 25 to 70 wt.%, or from 30 to 65 wt.%, or from 35 to 60 wt.%, or from 40 to 55 wt.%, or from 45 to 50 wt.% of diamond catalyst or diamond solvent based on a total weight of the diamond reactive material. As would be understood by one skilled in the art, diamond solvent-catalysts are chemical elements, compounds, or materials (e.g., metals) that are capable of reacting with polycrystalline diamond (e.g., catalyzing and/or solubilizing), resulting in the graphitization of the polycrystalline diamond, such as under load and at a temperature at or exceeding the graphitization temperature of diamond (*i.e*., about 700 °C). Thus, diamond reactive materials include materials that, under load and at a temperature at or exceeding the graphitization temperature of diamond, can lead to wear, sometimes rapid wear, and failure of components formed of or including polycrystalline diamond, such as diamond tipped tools. Diamond reactive materials include, but are not limited to, metals, metal alloys, and composite materials that contain more than trace amounts of diamond solvent-catalysts. In some aspects, the diamond reactive materials are in the form of hardfacings, coatings, or platings. Some exemplary diamond solvent-catalysts include iron, cobalt, nickel, ruthenium, rhodium, palladium, chromium, manganese, copper, titanium, tantalum, and alloys thereof. Thus, a diamond reactive material may be a material that includes more than trace amounts of iron, cobalt, nickel, ruthenium, rhodium, palladium, chromium, manganese, copper, titanium, tantalum, or alloys thereof. One exemplary diamond reactive material is steel. In some aspects, the diamond reactive material is a superalloy including, but not limited to, an iron-based superalloy, a cobalt-based superalloy, or a nickel-based superalloy. In certain aspects, the diamond reactive material is not and/or does not include (*i.e.*, specifically excludes) so called "superhard materials." As would be understood by one skilled in the art, "superhard materials" are a category of materials defined by the hardness of the material, which may be determined in accordance with the Brinell, Rockwell, Knoop and/or Vickers scales. For example, superhard materials include materials with a hardness value exceeding 40 gigapascals (GPa) when measured by the Vickers hardness test. As used herein, "superhard materials" are materials that are at least as hard as tungsten carbide, including tungsten carbide tiles and cemented tungsten carbide, such as is determined in accordance with one of these hardness scales. One skilled in the art would understand that a Brinell scale test may be performed, for example, in accordance with ASTM E10-18; the Vickers hardness test may be performed, for example, in accordance with ASTM E92-17; the Rockwell hardness test may be performed, for example, in accordance with ASTM E18; and the Knoop hardness test may be performed, for example, in accordance with ASTM E384-17. The "superhard materials" disclosed herein include, but are not limited to, tile tungsten carbide, cemented tungsten carbide, infiltrated tungsten carbide matrix, silicon carbide, silicon nitride, cubic boron nitride, and polycrystalline diamond. Thus, in some aspects, the "diamond reactive material" is partially or entirely composed of material(s) (*e.g*., metal, metal alloy, composite) that is softer (less hard) than superhard materials, such as less hard than tungsten carbide (*e.g*., tile or cemented), as determined in accordance with one of these hardness tests, such as the Brinell scale.

The opposing bearing surface is or includes a metal or metal alloy that contains at least 2 wt.% of a diamond solvent-catalyst based on a total weight of the metal or metal alloy. The diamond solvent-catalyst may be iron, cobalt, nickel, ruthenium, rhodium, palladium, chromium, manganese, copper, titanium, tantalum, or alloys thereof. The opposing bearing surface is or includes a metal or metal alloy that contains from 2 to 100 wt.%, or from 5 to 95 wt.%, or from 10 to 90 wt.%, or from 15 to 85 wt.%, or from 20 to 80 wt.%, or from 25 to 75 wt.%, or from 25 to 70 wt.%, or from 30 to 65 wt.%, or from 35 to 60 wt.%, or from 40 to 55 wt.%, or from 45 to 50 wt.% of diamond solvent-catalyst based on a total weight of the metal or metal alloy (*e.g.*, from 2 to 100 wt.%, of iron, cobalt, nickel, ruthenium, rhodium, palladium, chromium, manganese, copper, titanium, tantalum, or alloys thereof).

In some aspects, the opposing bearing surface has carbon applied thereto. In some such aspects, the carbon is applied to the opposing bearing surface prior to engagement with the diamond bearing surface. For example, the opposing bearing surface may be saturated with carbon. Without being bound by theory, it is believed that such application of carbon reduces the ability of the diamond solvent-catalyst in the opposing bearing surface to attract carbon through graphitization of the surface of the polycrystalline diamond element. That is, the carbon that is applied to the opposing bearing surface functions as a sacrificial layer of carbon. In addition, the opposing surface may be treated via any of the methods disclosed and described in the '758 Application. The opposing bearing surfaces disclosed herein may be surfaces that contain at least 2 wt.% of diamond solvent-catalyst.

In some embodiments, the opposing bearing surface is a treated surface in accordance with U.S. Patent Application No. 16/425,758. For example, the opposing bearing surface (also referred to as the opposing engagement surface) may be hardened, such as via cold working and work hardening processes including burnishing and shot peening; and/or heat-treating processes including through hardening, case hardening, and subzero, cryogenic, deep freezing treatments. Also, the opposing bearing surface may be plated and/or coated, such as via electroplating, electroless plating, including chromium plating, phosphating, vapor deposition, including physical vapor deposition (PVD) and chemical vapor deposition (CVD); or anodizing. Also, the opposing bearing surface may be cladded, such as via roll bonding, laser cladding, or explosive welding.

### Linear Bearings

Some embodiments include a linear bearing that includes one or more polycrystalline diamond bearing surfaces engaged with one or more opposing bearing surfaces of diamond solvent-catalyst. In some embodiments, the polycrystalline diamond bearing surfaces are highly lapped surfaces, polished surfaces, or highly polished surfaces. The polycrystalline diamond bearing surfaces of the linear bearings are in sliding engagement with an opposing bearing surface (*i.e.*, opposing surface of the linear bearing) that is a diamond solvent-catalyst surface. Depending on the desired configuration of the linear bearing, the sliding engagement between the diamond bearing surface and the opposing bearing surface may be a flat surface interface, a curved (*e.g*., cylindrical) surface interface, or a combination of flat and curved surface interfaces.

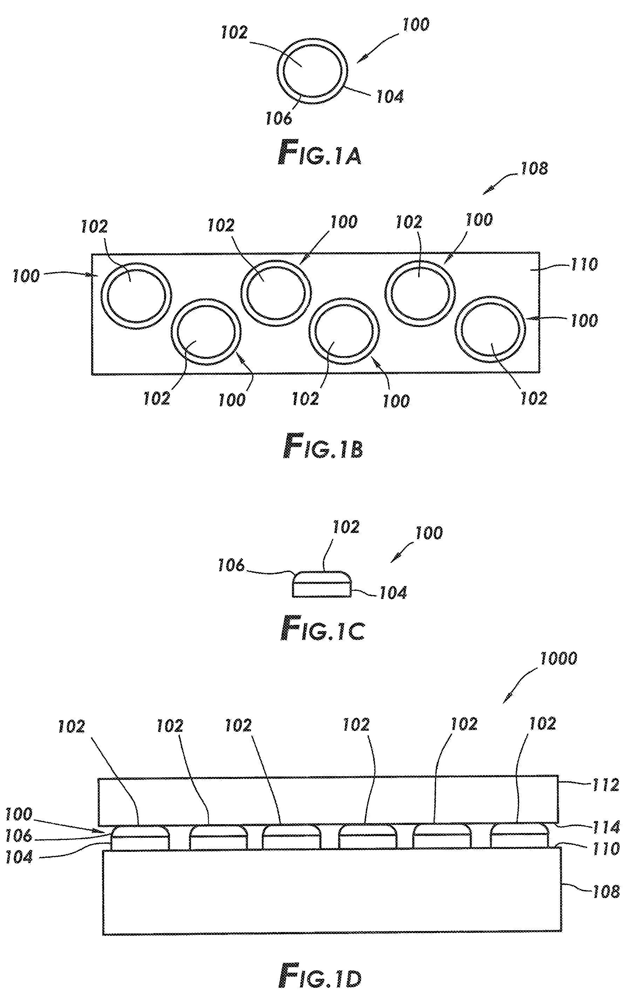

FIG. 1A depicts a polycrystalline diamond bearing element 100. Polycrystalline diamond bearing element 100 has a polycrystalline diamond 106 supported on a support 104. Polycrystalline diamond 106 has a diamond bearing surface 102. Diamond bearing surface 102 may be lapped, highly lapped, polished, or highly polished.

FIG. 1B depicts a linear bearing 108. Linear bearing 108 includes surface 110 of body. A plurality of polycrystalline diamond bearing elements 100 are coupled with surface 110, each having a diamond bearing surface 102. The plurality of polycrystalline diamond bearing elements 100 may be coupled with surface 110 such that diamond bearing surfaces 102 are raised above surface 110, or such that diamond bearing surfaces 102 are flush with surface 110. As shown in FIG. 1B, the polycrystalline diamond bearing elements 100 may be arranged in a staggered pattern of rows on surface 110. The present disclosure is, of course, not limited to this arrangement, and the polycrystalline diamond bearing elements may be arranged in other patterns, or may be arranged randomly.

FIG. 1C depicts a side view of the polycrystalline diamond bearing element 100 of FIG. 1A, including polycrystalline diamond 106 having diamond bearing surface 102 and supported on support 104.

FIG. 1D depicts a side of a bearing assembly 1000 that includes the linear bearing 108 of FIG. 1B engaged with an opposing bearing element 112 (or opposing component) that has opposing bearing surface 114. Opposing bearing surface 114 is a surface of diamond solvent-catalyst material.

In the embodiment of FIG. 1D, the plurality of polycrystalline diamond bearing elements 100 are coupled with surface 110 such that the diamond bearing surfaces 102 are raised above surface 110. Thus, when linear bearing 108 is engaged with opposing bearing element 112, diamond bearing surfaces 102 engage with opposing bearing surface 114, but surface 110 is spaced apart from and not engaged with opposing bearing surface 114. However, the present disclosure is not limited to this particular arrangement, and the plurality of polycrystalline diamond bearing elements may be coupled with the surface of the linear bearing such that the diamond bearing surfaces are flush with the surface of the linear bearing. In such flush-mounted embodiments, the diamond bearing surfaces and the surface of the linear bearing would both be in contact with the opposing bearing surface (optionally, simultaneously). While opposing bearing surface 114 is shown as a single surface, the present disclosure is not limited to this particular arrangement, and the opposing bearing surface may be multiple, discontinuous surfaces. Also, while multiple polycrystalline diamond elements 100 are shown as providing multiple diamond bearing surfaces 102, the present disclosure is not limited to this particular arrangement, and the diamond bearing surface may be a single surface provided by single polycrystalline diamond element.

Within bearing assembly 1000, linear bearing 108 and opposing bearing element 112 are movingly (*e.g*., slidingly) engaged, such that one of linear bearing 108 and opposing bearing element 112 moves (*e.g*., slides) relative to the other.

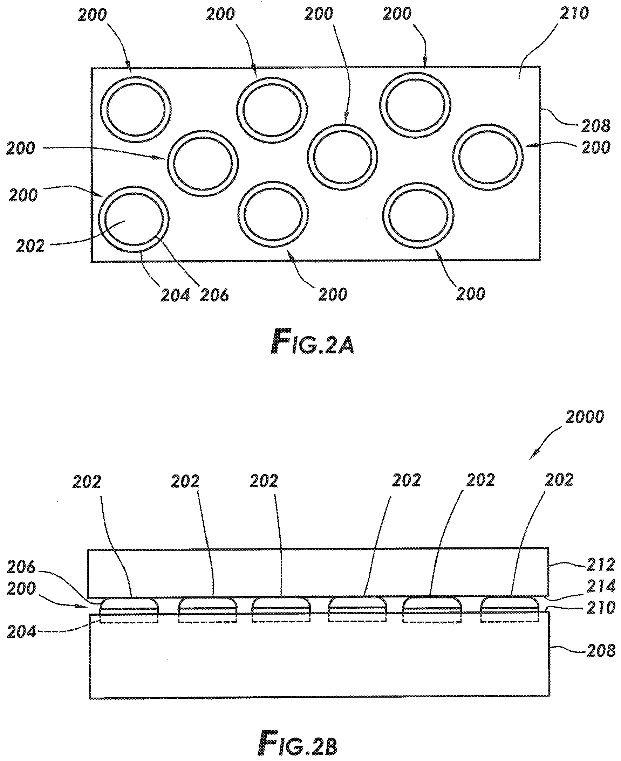

FIG. 2A depicts linear bearing 208, including surface 210. A plurality of polycrystalline diamond bearing elements 200 are coupled with surface 210. Each polycrystalline diamond bearing elements 200 includes a polycrystalline diamond 206 supported on support 204, and each polycrystalline diamond 206 has a diamond bearing surface 202.

FIG. 2B depicts a side of a bearing assembly 2000 that includes the linear bearing 208 of FIG. 2A engaged with an opposing bearing element 212 that has opposing bearing surface 214. Opposing bearing surface 214 is a surface of diamond solvent-catalyst material. In the embodiment of FIG. 2B, the plurality of polycrystalline diamond bearing elements 200 are coupled with surface 210 such that the diamond bearing surfaces 202 are raised above surface 210. Thus, when linear bearing 208 is engaged with opposing bearing element 212, diamond bearing surfaces 202 engage with opposing bearing surface 214, but surface 210 is spaced apart from and not engaged with opposing bearing surface 214. As shown in FIG. 2B, supports 204 are at least partially embedded within surface 210.

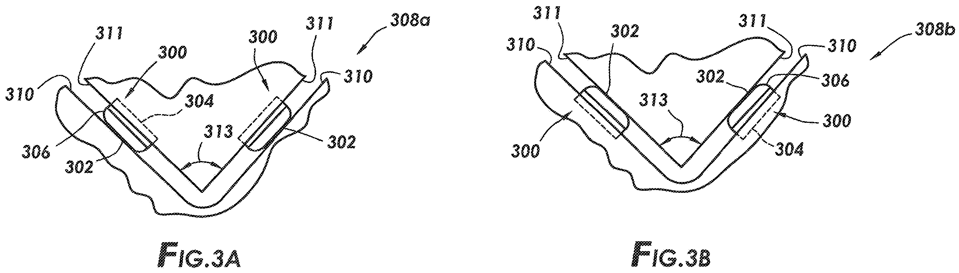

FIGS. 3A and 3B depict multi-surface linear bearings 308a and 308b, respectively, with surfaces 310 and 311, and including a bend in the surfaces 310 and 311 at angle 313. As shown in FIG. 3A, polycrystalline diamond elements 300 (including polycrystalline diamonds 306 on supports 304) are positioned and arranged relative to surfaces 310 and 311 such that polycrystalline diamond elements 300 are coupled with surface 311 such that diamond bearing surfaces 302 are engaged with surface 310. As shown in FIG. 3B, polycrystalline diamond elements 300 are positioned and arranged relative to surfaces 310 and 311 such that polycrystalline diamond elements 300 are coupled with surface 310 such that diamond bearing surfaces 302 are engaged with surface 311. Thus, the polycrystalline diamond elements 300 are arranged in linear bearings 308a to engage with an adjacent opposing engagement surface 310, and the polycrystalline diamond elements 300 are arranged in linear bearings 308b to engage with an adjacent opposing engagement surface 311. While shown as not flush-mounted in FIGS. 3A and 3B, in some embodiments the polycrystalline diamond elements are flush-mounted.

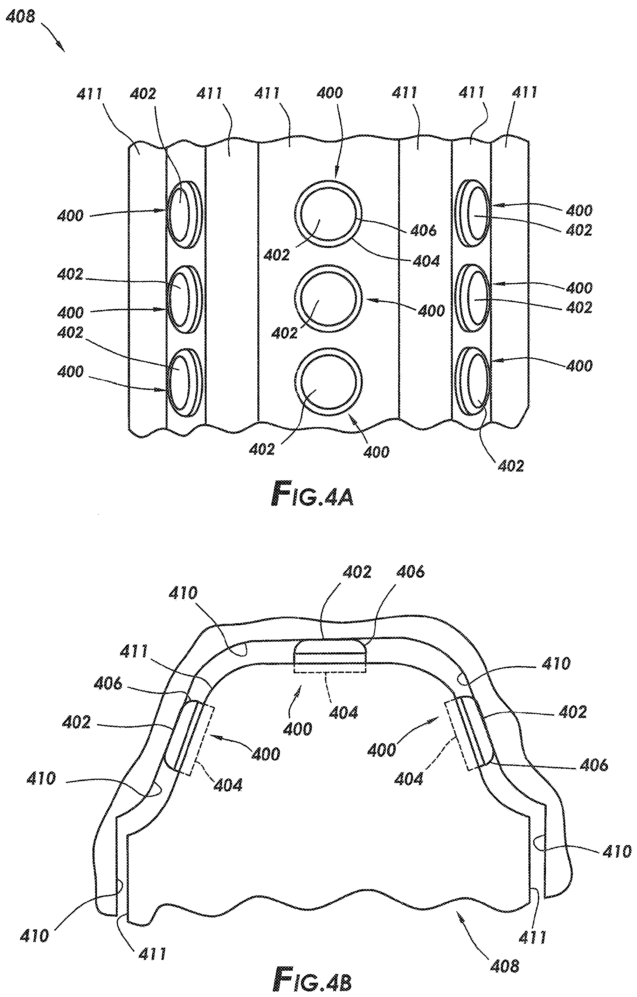

FIGS. 4A and 4B depict a multi-surface linear bearing 408 with non-planar surfaces 411. Polycrystalline diamond elements 400 (including polycrystalline diamonds 406 on supports 404) are positioned and arranged on surface 411 and relative to surface 410 such that diamond bearing surfaces 402 are engaged with opposing bearing surface 410.

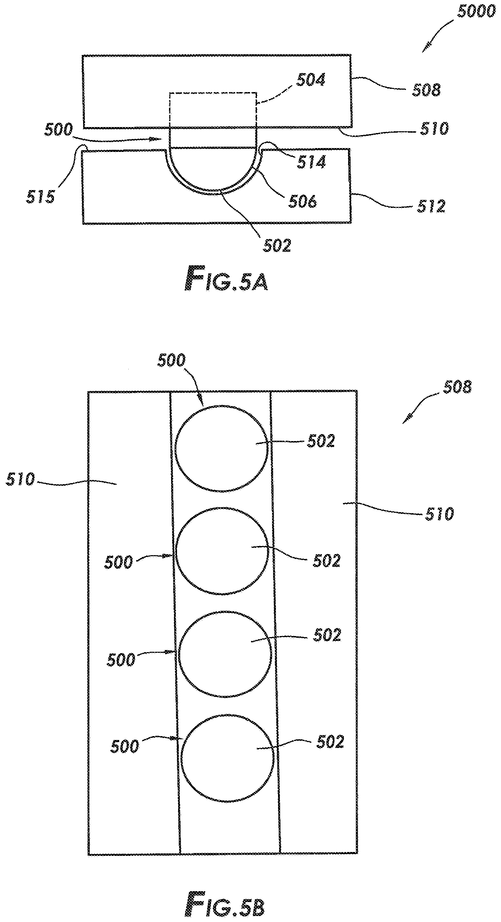

FIG. 5A depicts bearing assembly 5000, including linear bearing 508 movingly engaged with opposing bearing surface 514 of opposing bearing element 512. FIG. 5B is a top view of linear bearing element 508 in isolation from opposing bearing element 512. As shown in FIG. 5A, the polycrystalline bearing elements 500 (including polycrystalline diamonds 506 on supports 504) have curved, convex diamond bearing surfaces 502 (*e.g.*, domed surfaces) that are engaged within curved, concave opposing bearing surfaces 514. The polycrystalline bearing elements 500 are sized and positioned such that surface 510 is maintained in a spaced-apart relationship from opposing bearing surface 514 and opposing bearing surface 515. The embodiment in FIGS. 5A and 5B have a single, linear row of aligned polycrystalline bearing elements 500. However, the present disclosure is not limited to such an arrangement, and may include multiple rows of polycrystalline bearing elements.

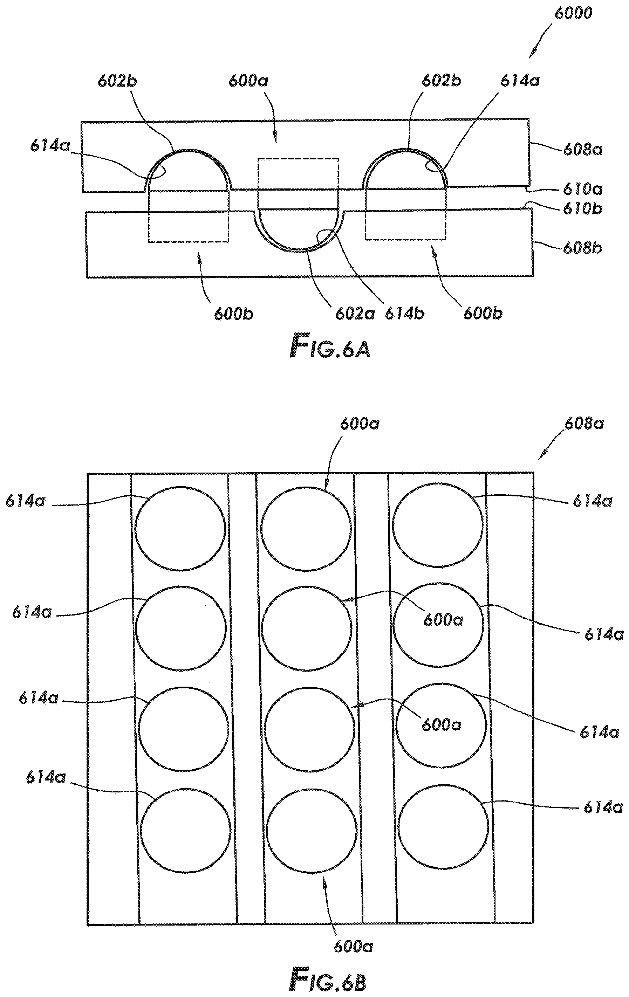

As shown in FIGS. 6A and 6B, the polycrystalline diamond bearing elements are not limited to being positioned on only one surface in a bearing assembly. With reference to FIG. 6A, bearing assembly 6000 includes linear bearing 608a movingly engaged with linear bearing 608b. Linear bearing 608a includes a single row of polycrystalline diamond bearing elements 600a having diamond bearing surfaces 602a. Linear bearing 608a also includes two rows of opposing engagement surfaces 614a, one on either side of the single row of polycrystalline diamond bearing elements 600a. Linear bearing 608b includes two rows of polycrystalline diamond bearing elements 600b having diamond bearing surfaces 602b. Linear bearing 608b also includes a single row of opposing engagement surfaces 614b between the two rows of polycrystalline diamond bearing elements 600b. With linear bearing 608a movingly engaged with linear bearing 608b, diamond bearing surfaces 602a are engaged with opposing bearing surfaces 614b, and diamond bearing surfaces 602b are engaged with opposing bearing surfaces 614a. Thus, each of linear bearing 608a and 608b provides diamond bearing surfaces for engagement with opposing bearing surfaces of the opposing linear bearing, and each of linear bearing 608a and 608b provides opposing bearing surfaces (of diamond reactive material) for engagement with diamond bearing surfaces of the opposing linear bearing. The surfaces 610a and 610b are maintained in a spaced-apart relationship from one another.

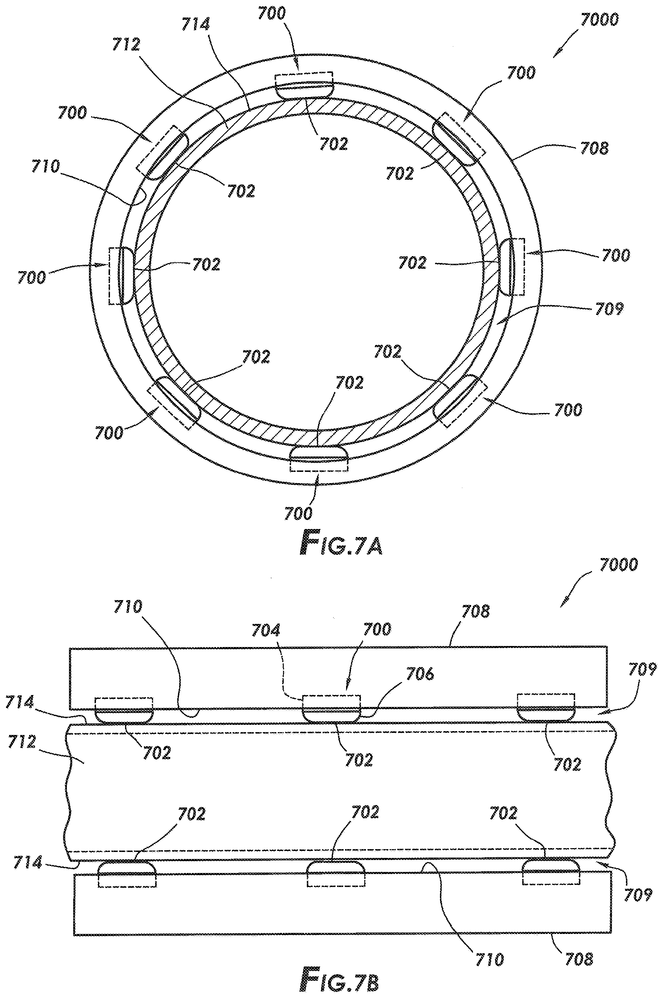

FIGS. 7A and 7B depict a bearing assembly that includes a bearing element engaged with a tubular. Bearing assembly 7000 includes bearing element 708 movingly engaged with tubular 712. Bearing element 708 is a hollow cylinder with the annulus of surface 710 defining the hollow or cavity 709 of bearing element 708. A plurality of polycrystalline diamond bearing elements 700, each including a support 704 and polycrystalline diamond 706, are coupled with and arranged about surface 710 such that the diamond bearing surfaces 702 thereof are positioned to face into the cavity 709 of bearing element 708. The outer surface of tubular 712 defines opposing bearing surface 714. Tubular 712 is positioned within cavity 709 such that opposing bearing surface 714 is circumferentially surrounded by the polycrystalline diamond bearing elements 700 of bearing element 708. The diamond bearing surfaces 702 are positioned to engage with opposing bearing surface 714, and extend from surface 710 such that surface 710 is maintained in a spaced-apart relationship relative to opposing bearing surface 714. One skilled in the art would understand that the arrangement of FIGS. 7A and 7B could be reversed without departing from the scope of this disclosure. That is, inner surface of the hollow cylinder may define the opposing bearing surface, and the polycrystalline diamond bearing elements may be positioned on the outer surface of the tubular for engagement with the opposing bearing surface. While tubular 712 is shown as hollow, in some embodiments, tubular 712 may be solid.

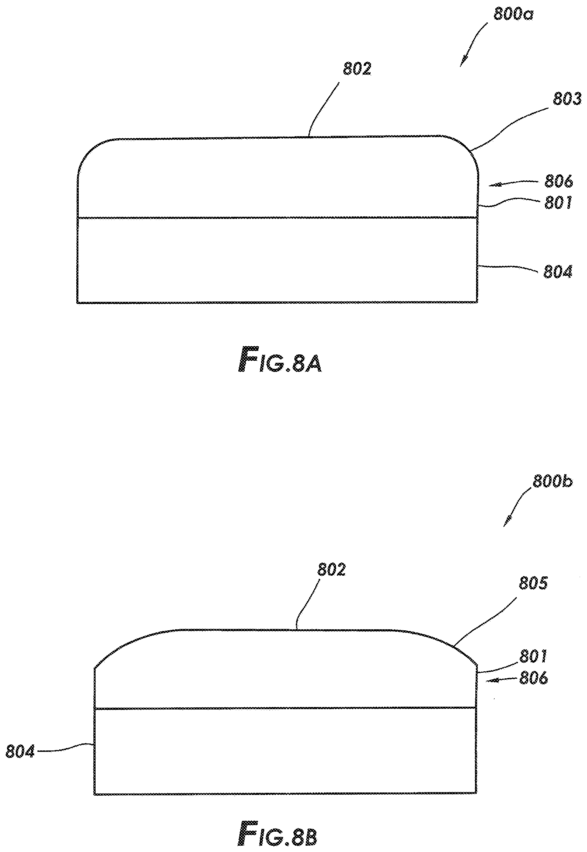

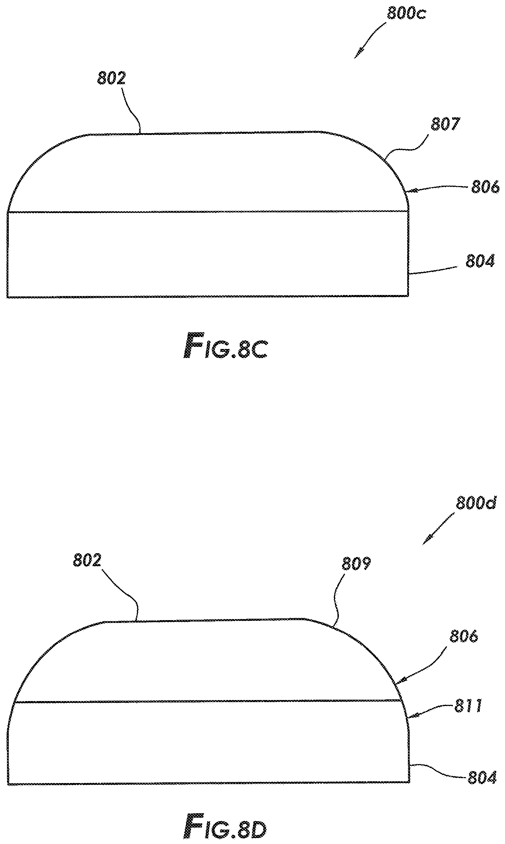

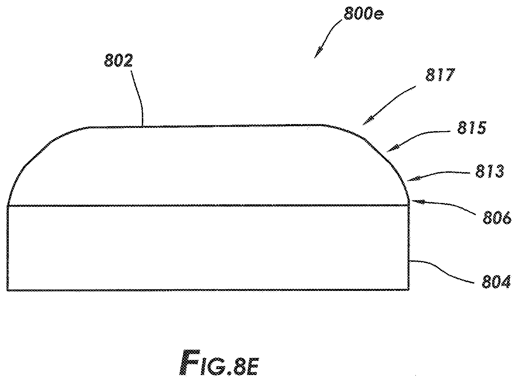

FIGS. 8A-8E depict various embodiments of the polycrystalline diamond bearing elements disclosed herein. As is evident from FIGS. 8A-8E, the polycrystalline diamond bearing elements disclosed herein can have various shapes, contours, and surface features. One skilled in the art would understand, of course, that the polycrystalline diamond bearing elements disclosed herein are not limited to the embodiments shown in FIGS. 8A-8E. FIG. 8A depicts polycrystalline diamond bearing element 800a, including polycrystalline diamond 806 supported on support element 804. Polycrystalline diamond 806 has a curved or beveled edge 803 and a straight edge 801, as well as polycrystalline diamond bearing surface 802. Such curvature or beveling may preclude edge contact between the polycrystalline diamond 806 and the opposing bearing surface in certain applications. The polycrystalline diamond bearing element 800b of FIG. 8B is substantially similar to that of FIG. 8A, with the exception that polycrystalline diamond bearing element 800b has curved or beveled edge 805 that is curved or beveled at a different angle relative to diamond bearing surface 802 than curved or beveled edge 803. The polycrystalline diamond bearing element 800c of FIG. 8C is substantially similar to that of FIG. 8A, with the exception that polycrystalline diamond bearing element 800c has curved or beveled edge 807 that is curved or beveled at a different angle relative to diamond bearing surface 802 than curved or beveled edge 803. Also, curved or beveled edge 807 extends to support 804 and lacks a straight edge portion, whereas, the polycrystalline diamond 806 of FIG. 8A has a straight edge portion 801. The polycrystalline diamond bearing element 800d of FIG. 8D is substantially similar to that of FIG. 8C, with the exception that polycrystalline diamond bearing element 800d has curved or beveled edge 809 that is curved or beveled at a different angle relative to diamond bearing surface 802 than curved or beveled edge 807. Also, the support 804 of FIG. 8D has a curved or beveled surface 811. The polycrystalline diamond bearing element 800e of FIG. 8E is substantially similar to that of FIG. 8A, with the exception that polycrystalline diamond bearing element 800e has multiple, different curved or beveled edges 813, 815, and 817. While the polycrystalline diamonds shown in the Figures are shown as being supported on support elements, the present disclosure is not limited to such polycrystalline diamonds, and may include unsupported polycrystalline diamonds.

### Linear Bearing Sleeves

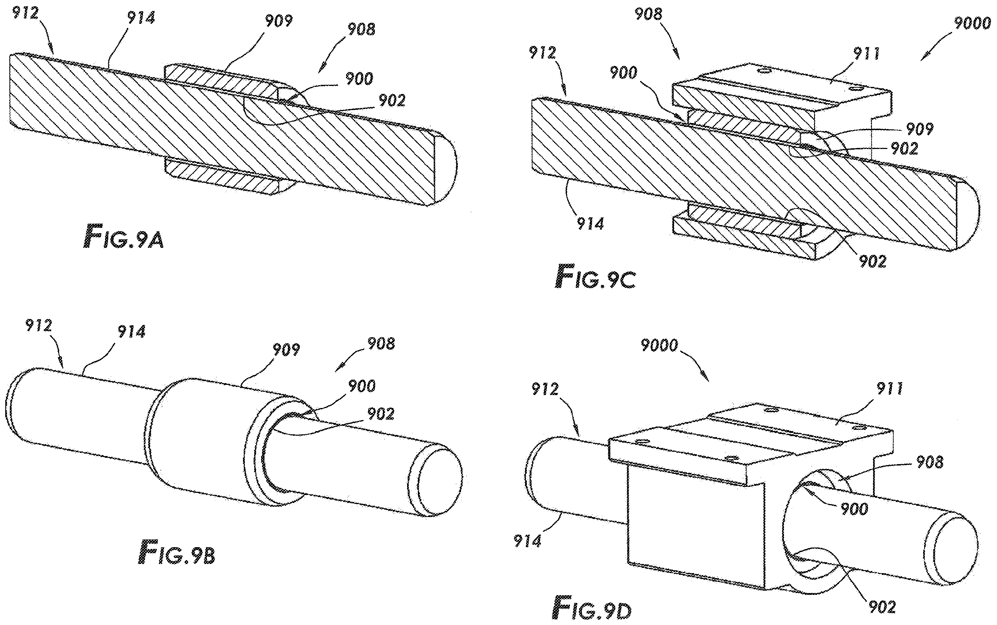

FIGS. 9A-9D depict an exemplary application of the linear bearings disclosed herein, as continuous sleeve bearings. Bearing assembly 9000 includes bearing element 908 movingly engaged with tubular 912. Bearing element 908 includes hollow cylinder 909 coupled with body 911. A polycrystalline diamond bearing element 900 is coupled with and arranged within the annulus of hollow cylinder 909 on a surface thereof such that diamond bearing surface 902 thereof is positioned to face tubular 912. The outer surface of tubular 912 defines opposing bearing surface 914. Tubular 912 is positioned within the cavity of hollow tubular 909 such that opposing bearing surface 914 is circumferentially surrounded by the polycrystalline diamond bearing element 900. The diamond bearing surface 902 is positioned to engage with opposing bearing surface 914. One skilled in the art would understand that the arrangement of FIGS. 9A-9D could be reversed without departing from the scope of this disclosure. That is, inner surface of the hollow cylinder may define the opposing bearing surface, and the polycrystalline diamond bearing element may be positioned on the outer surface of the tubular for engagement with the opposing bearing surface. While tubular 912 is shown as solid, in some embodiments, the tubular may be hollow.

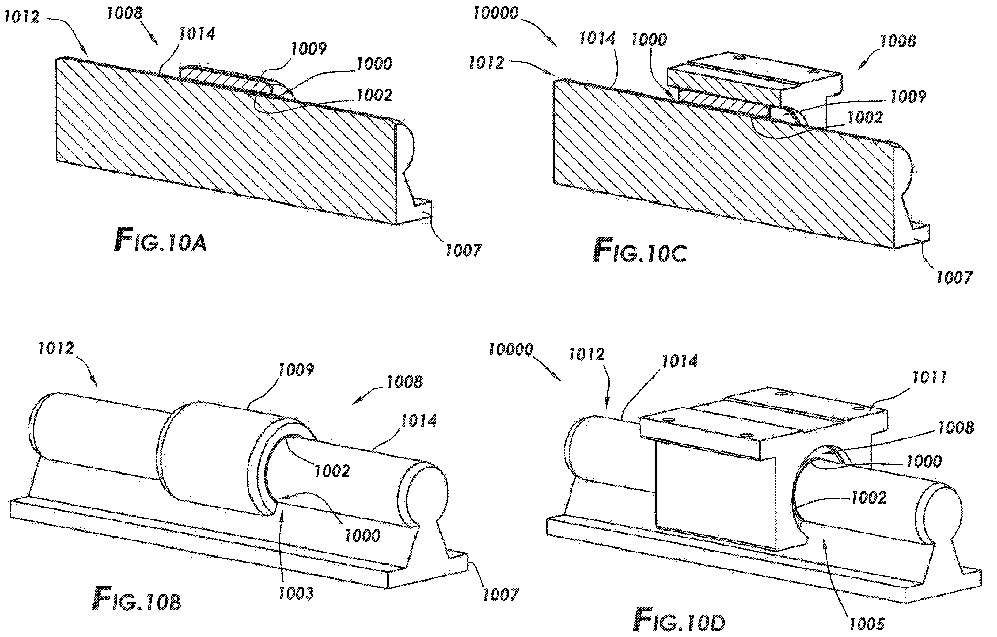

FIGS. 10A-10D depict an exemplary application of the linear bearings disclosed herein, as open continuous sleeve bearings. Bearing assembly 10000 includes bearing element 1008 movingly engaged with rail 1012. Rail 1012 is similar to tubular 912, with the exception that the tubular portion of rail 1012 is coupled with a base 1007. Bearing element 1008 includes hollow cylinder 1009 coupled with body 1011. Hollow cylinder 1009 is similar to hollow cylinder 909, with the exception that hollow cylinder 1009 is open on one side 1003. Also, body 1011 is similar to body 911, with the exception that body 1011 is open on one side 1005. A polycrystalline diamond bearing element 1000 is coupled with and arranged within the annulus of hollow cylinder 1009 on a surface thereof such that diamond bearing surface 1002 thereof is positioned to face rail 1012. The outer surface of rail 1012 defines opposing bearing surface 1014. Rail 1012 is positioned within the cavity of hollow tubular 1009 such that opposing bearing surface 1014 is circumferentially surrounded by the polycrystalline diamond bearing element 1000. The diamond bearing surface 1002 is positioned to engage with opposing bearing surface 1014. One skilled in the art would understand that the arrangement of FIGS. 10A-10D could be reversed without departing from the scope of this disclosure. That is, inner surface of the hollow cylinder may define the opposing bearing surface, and the polycrystalline diamond bearing element may be positioned on the outer surface of the tubular for engagement with the opposing bearing surface.

### Applications

The present disclosure provides for linear bearings that may exhibit: (1) a low coefficient of friction during use; (2) a long operational life; (3) less susceptibility to point loading; (4) the ability to withstand contamination without an unacceptable increase in wear; (5) the ability to operate successfully without lubrication; or (6) combinations thereof. In some embodiments, the linear bearings disclosed herein exhibit a coefficient of friction (CoF) of 0.1 or less, or 0.05 or less, or 0.01 or less, or from 0.01 to 0.1.

In certain embodiments, the linear bearings disclosed herein are suitable for use in machine tool ways, precision positioning tables, robotics, additive manufacturing printers, transfer shuttles, food processing equipment, and semi-conductor manufacturing. The linear bearings disclosed herein are, of course, not limited to these particular exemplary applications, and may be used in other applications where linear bearings are used, such as the applications disclosed in United States Patent No. 2,693,396; 3,582,161; 3,603,652; 3,752,541; 5,193,363; 4,428,627; 9,222,515; and 5,618,114. In some embodiments, the linear bearings disclosed herein are linear-motion bearings or linear slides configured to provide free linear motion in two opposing directions along an axis. In some such embodiments, the linear bearings disclosed herein are used to provide bearing to motorized components. In other embodiments, the linear bearings disclosed herein are plain bearings, such as dovetail slides, compound slides or rack slides. In some embodiments, the linear bearings disclosed herein are used as bearings for relatively heavy and/or large structures, such as to provide load sliding capabilities to such structures. For example, the linear bearings disclosed herein may be used on skid plates for moving heavy equipment, such as for moving oilfield rigs. The linear bearings disclosed herein may be used to provide sliding capabilities to large structures, such as expansion joints in bridges, buildings, and pipeline support structures; thereby, providing for movement of such structures.

Although the present embodiments and advantages have been described in detail, it should be understood that various changes, substitutions and alterations can be made herein without departing from the scope of the disclosure. Moreover, the scope of the present application is not intended to be limited to the particular embodiments of the process, machine, manufacture, composition of matter, means, methods and steps described in the specification. As one of ordinary skill in the art will readily appreciate from the disclosure, processes, machines, manufacture, compositions of matter, means, methods, or steps, presently existing or later to be developed that perform substantially the same function or achieve substantially the same result as the corresponding embodiments described herein may be utilized according to the present disclosure. The invention is defined by the appended claims.

## Claims

1. A linear bearing assembly (1000), the assembly (1000) comprising:
a linear bearing (108) comprising a polycrystalline diamond bearing element (100), wherein the polycrystalline diamond bearing element (100) has a polycrystalline diamond bearing surface (102); and
an opposing component (112), the opposing component (112) having an opposing bearing surface (114) thereon, wherein the opposing bearing surface (114) is a metal surface comprising a metal containing at least 2 weight percent of diamond solvent-catalyst based on a total weight of the metal;
wherein the linear bearing (108) is movably coupled with the opposing component (112) such that the polycrystalline diamond bearing surface (102) is engaged with the opposing bearing surface (114) comprising the metal containing diamond solvent-catalyst.

2. The assembly (1000) of claim 1, wherein the polycrystalline diamond bearing surface (102) has a surface finish of at most 20µin (0.508µm) and preferably less than 2µin (0.0508 µm).

3. The assembly (1000) of claim 1, wherein the metal of the opposing bearing surface (114)
comprises from 5 to 100wt.% of the diamond solvent-catalyst based on the total weight of the metal.

4. The assembly (1000) of claim 1, wherein the diamond solvent-catalyst is selected from the group consisting of: iron, cobalt, nickel, ruthenium, rhodium, palladium, chromium, manganese, copper, titanium, or tantalum, and combinations thereof.

5. The assembly (1000) of claim 1, wherein the metal of the opposing bearing surface (114) is softer than a superhard material.

6. The assembly (1000) of claim 1, wherein the linear bearing assembly (1000) is lubricated.

7. The assembly (1000) of claim 1, wherein the polycrystalline diamond bearing surface (102) is in direct contact with the opposing bearing surface (114), or wherein a fluid film is positioned between the polycrystalline diamond bearing surface (102) and the opposing bearing surface (114).

8. The assembly (1000) of claim 1, wherein the polycrystalline diamond bearing surface (102) is flush with a surface (110) of a body of the linear bearing (108), or wherein the polycrystalline diamond bearing surface (102) is raised above the surface (110) of the body of the linear bearing (108).

9. The assembly (5000) of claim 1, wherein:
the polycrystalline diamond bearing element (500) is positioned such that a surface (510) of a body of the linear bearing (508) is maintained in a spaced-apart relationship from the opposing bearing surface (515); or
the polycrystalline diamond bearing element (500) is raised above the surface (510) of the body of the linear bearing (508), wherein the opposing bearing surface (514) is a concavity in the opposing component (512).

10. The assembly (6000) of claim 1, wherein the linear bearing (608a) has a second opposing bearing surface (614a) thereon, wherein the opposing component (608b) has a second polycrystalline diamond bearing element (606b) thereon, and wherein a polycrystalline diamond bearing surface (602b) of the second polycrystalline diamond bearing element (600b) is engaged with the second opposing bearing surface (614a).

11. The assembly (9000) of claim 1, wherein:
the linear bearing (908) is a hollow cylinder (909) including an annulus, wherein the opposing component (912) is a tubular positioned within the annulus of the hollow cylinder (909), and wherein an outer surface of the tubular is the opposing bearing surface (914); or
the opposing component is a hollow cylinder with the opposing bearing surface defining an annulus of the hollow cylinder, wherein the linear bearing is a tubular positioned within the annulus of the hollow cylinder.

12. The assembly (1000) of claim 1, wherein the polycrystalline diamond bearing element (800a) has at least one curved or beveled edge (803).

13. The assembly (1000) of claim 1, wherein engagement between the linear bearing (108) and the opposing component (112) exhibits a coefficient of friction of less than 0.1.

14. The assembly (1000) of claim 1, wherein the metal is steel.

15. A method of bearing load, the method comprising:
providing a linear bearing (108) comprising a polycrystalline diamond bearing element (100), wherein the polycrystalline diamond bearing element (100) has a polycrystalline diamond bearing surface (102);
providing an opposing component (112) having an opposing bearing surface (114) thereon, wherein the opposing bearing surface (114) is a metal surface comprising a metal containing at least 2 weight percent of diamond solvent-catalyst based on a total weight of the metal; and
movably coupling the linear bearing (108) with the opposing component (112) such that the polycrystalline diamond bearing surface (102) is engaged with the opposing bearing surface (114) comprising the metal that contains the diamond solvent-catalyst.

## Patentansprüche

1. Linearlageranordnung (1000), wobei die Anordnung (1000) Folgendes umfasst:
ein Linearlager (108), das ein polykristallines Diamantlagerelement (100) umfasst, wobei das polykristalline Diamantlagerelement (100) eine polykristalline Diamantlagerfläche (102) aufweist; und
eine gegenüberliegende Komponente (112), wobei die gegenüberliegende Komponente (112) eine gegenüberliegende Lagerfläche (114) darauf aufweist, wobei die gegenüberliegende Lagerfläche (114) eine Metallfläche ist, die ein Metall umfasst, das mindestens 2 Gewichtsprozent Diamantlösungsmittel-Katalysator basierend auf einem Gesamtgewicht des Metalls aufweist;
wobei das Linearlager (108) beweglich mit der gegenüberliegenden Komponente (112) gekoppelt ist, sodass die polykristalline Diamantlagerfläche (102) mit der gegenüberliegenden Lagerfläche (114) in Eingriff steht, die das Diamantlösungsmittel-Katalysator aufweisende Metall umfasst.

2. Anordnung (1000) nach Anspruch 1, wobei die polykristalline Diamantlagerfläche (102) eine Oberflächengüte von höchstens 20 µin (0,508 µm) und vorzugsweise weniger als 2 µin (0,0508 µm) aufweist.

3. Anordnung (1000) nach Anspruch 1, wobei das Metall der gegenüberliegenden Lagerfläche (114)
5 bis 100 Gew.-% des Diamantlösungsmittel-Katalysators basierend auf dem Gesamtgewicht des Metalls umfasst.

4. Anordnung (1000) nach Anspruch 1, wobei der Diamantlösungsmittel-Katalysator ausgewählt ist aus der Gruppe, bestehend aus Eisen, Kobalt, Nickel, Ruthenium, Rhodium, Palladium, Chrom, Mangan, Kupfer, Titan oder Tantal und Kombinationen davon.

5. Anordnung (1000) nach Anspruch 1, wobei das Metall der gegenüberliegenden Lagerfläche (114) weicher als ein superhartes Material ist.

6. Anordnung (1000) nach Anspruch 1, wobei die Linearlageranordnung (1000) geschmiert ist.

7. Anordnung (1000) nach Anspruch 1, wobei die polykristalline Diamantlagerfläche (102) in direktem Kontakt mit der gegenüberliegenden Lagerfläche (114) steht oder wobei ein Fluidfilm zwischen der polykristallinen Diamantlagerfläche (102) und der gegenüberliegenden Lagerfläche (114) positioniert ist.

8. Anordnung (1000) nach Anspruch 1, wobei die polykristalline Diamantlagerfläche (102) bündig mit einer Oberfläche (110) eines Körpers des Linearlagers (108) ist oder wobei die polykristalline Diamantlagerfläche (102) über die Oberfläche (110) des Körpers des Linearlagers (108) hinausragt.

9. Anordnung (5000) nach Anspruch 1, wobei:
das polykristalline Diamantlagerelement (500) so positioniert ist, dass eine Oberfläche (510) eines Körpers des Linearlagers (508) in einer beabstandeten Beziehung zu der gegenüberliegenden Lagerfläche (515) gehalten wird; oder
das polykristalline Diamantlagerelement (500) über die Oberfläche (510) des Körpers des Linearlagers (508) hinausragt, wobei die gegenüberliegende Lagerfläche (514) eine Konkavität in der gegenüberliegenden Komponente (512) ist.

10. Anordnung (6000) nach Anspruch 1, wobei das Linearlager (608a) eine zweite gegenüberliegende Lagerfläche (614a) darauf aufweist, wobei die gegenüberliegende Komponente (608b) ein zweites polykristallines Diamantlagerelement (606b) darauf aufweist, und wobei eine polykristalline Diamantlagerfläche (602b) des zweiten polykristallinen Diamantlagerelements (600b) mit der zweiten gegenüberliegenden Lagerfläche (614a) in Eingriff steht.

11. Anordnung (9000) nach Anspruch 1, wobei:
das Linearlager (908) ein Hohlzylinder (909) ist, der einen Ringraum einschließt, wobei die gegenüberliegende Komponente (912) ein Rohr ist, das innerhalb des Ringraums des Hohlzylinders (909) positioniert ist, und wobei eine Außenfläche des Rohrs die gegenüberliegende Lagerfläche (914) ist; oder
die gegenüberliegende Komponente ein Hohlzylinder ist, wobei die gegenüberliegende Lagerfläche einen Ringraum des Hohlzylinders definiert, wobei das Linearlager ein Rohr ist, das innerhalb des Ringraums des Hohlzylinders positioniert ist.

12. Anordnung (1000) nach Anspruch 1, wobei das polykristalline Diamantlagerelement (800a) mindestens eine gekrümmte oder abgeschrägte Kante (803) aufweist.

13. Anordnung (1000) nach Anspruch 1, wobei der Eingriff zwischen dem Linearlager (108) und der gegenüberliegenden Komponente (112) einen Reibungskoeffizienten von weniger als 0,1 aufweist.

14. Anordnung (1000) nach Anspruch 1, wobei das Metall Stahl ist.

15. Verfahren zum Tragen einer Last, wobei das Verfahren Folgendes umfasst:
Bereitstellen eines Linearlagers (108), das ein polykristallines Diamantlagerelement (100) umfasst, wobei das polykristalline Diamantlagerelement (100) eine polykristalline Diamantlagerfläche (102) aufweist;
Bereitstellen einer gegenüberliegenden Komponente (112) mit einer gegenüberliegenden Lagerfläche (114), wobei die gegenüberliegende Lagerfläche (114) eine Metallfläche ist, die ein Metall umfasst, das mindestens 2 Gewichtsprozent Diamantlösungsmittel-Katalysator basierend auf einem Gesamtgewicht des Metalls aufweist; und
bewegliches Koppeln des Linearlagers (108) mit der gegenüberliegenden Komponente (112), sodass die polykristalline Diamantlagerfläche (102) mit der gegenüberliegenden Lagerfläche (114) in Eingriff steht, die das Metall umfasst, das den Diamantlösungsmittel-Katalysator aufweist.

## Revendications

1. Ensemble (1000) palier linéaire, l'ensemble (1000) comprenant :
un palier linéaire (108) comprenant un élément de palier en diamant polycristallin (100), dans lequel l'élément de palier en diamant polycristallin (100) présente une surface de palier en diamant polycristallin (102) ; et
un composant opposé (112), le composant opposé (112) présentant une surface de palier opposée (114) sur celui-ci, dans lequel la surface de palier opposée (114) est une surface métallique comprenant un métal contenant au moins 2 % en poids de solvant-catalyseur du diamant par rapport au poids total du métal ;
dans lequel le palier linéaire (108) est couplé de manière mobile avec le composant opposé (112) de sorte que la surface de palier en diamant polycristallin (102) vient en prise avec la surface de palier opposée (114) comprenant le métal contenant le solvant-catalyseur du diamant.

2. Ensemble (1000) selon la revendication 1, dans lequel la surface de palier en diamant polycristallin (102) présente un fini de surface d'au maximum 20 µin (0,508 µm) et de préférence inférieur à 2 µin (0,0508 µm).

3. Ensemble (1000) selon la revendication 1, dans lequel le métal de la surface de palier opposée (114) comprend de 5 à 100 % en poids du solvant-catalyseur du diamant par rapport au poids total du métal.

4. Ensemble (1000) selon la revendication 1, dans lequel le solvant-catalyseur du diamant est sélectionné dans le groupe consistant en : fer, cobalt, nickel, ruthénium, rhodium, palladium, chrome, manganèse, cuivre, titane ou tantale, et des combinaisons de ceux-ci.

5. Ensemble (1000) selon la revendication 1, dans lequel le métal de la surface de palier opposée (114) est plus tendre qu'un matériau superdur.

6. Ensemble (1000) selon la revendication 1, dans lequel l'ensemble (1000) palier linéaire est lubrifié.

7. Ensemble (1000) selon la revendication 1, dans lequel la surface de palier en diamant polycristallin (102) est en contact direct avec la surface de palier opposée (114), ou dans lequel un film fluide est positionné entre la surface de palier en diamant polycristallin (102) et la surface de palier opposée (114).

8. Ensemble (1000) selon la revendication 1, dans lequel la surface de palier en diamant polycristallin (102) est affleurante à une surface (110) d'un corps du palier linéaire (108), ou dans lequel la surface de palier en diamant polycristallin (102) est surélevée par rapport à la surface (110) du corps du palier linéaire (108).

9. Ensemble (5000) selon la revendication 1, dans lequel :
l'élément de palier en diamant polycristallin (500) est positionné de sorte qu'une surface (510) d'un corps du palier linéaire (508) est maintenue dans une relation espacée par rapport à la surface de palier opposée (515) ; ou
l'élément de palier en diamant polycristallin (500) est surélevé par rapport à la surface (510) du corps du palier linéaire (508), dans lequel la surface de palier opposée (514) est une concavité dans le composant opposé (512).

10. Ensemble (6000) selon la revendication 1, dans lequel le palier linéaire (608a) présente une deuxième surface de palier opposée (614a) sur celui-ci, dans lequel le composant opposé (608b) présente un deuxième élément de palier en diamant polycristallin (606b) sur celui-ci, et dans lequel une surface de palier en diamant polycristallin (602b) du deuxième élément de palier en diamant polycristallin (600b) vient en prise avec la deuxième surface de palier opposée (614a).

11. Ensemble (9000) selon la revendication 1, dans lequel :
le palier linéaire (908) est un cylindre creux (909) incluant un espace annulaire, dans lequel le composant opposé (912) est un tube positionné dans l'espace annulaire du cylindre creux (909), et dans lequel une surface externe du tube est la surface de palier opposée (914) ; ou
le composant opposé est un cylindre creux avec la surface de palier opposée définissant un espace annulaire du cylindre creux, dans lequel le palier linéaire est un tube disposé dans l'espace annulaire du cylindre creux.

12. Ensemble (1000) selon la revendication 1, dans lequel l'élément de palier en diamant polycristallin (800a) présente au moins un bord courbe ou chanfreiné (803).

13. Ensemble (1000) selon la revendication 1, dans lequel la mise en prise entre le palier linéaire (108) et le composant opposé (112) présente un coefficient de frottement inférieur à 0,1.

14. Ensemble (1000) selon la revendication 1, dans lequel le métal est de l'acier.

15. Procédé de support de charge, le procédé comprenant :
la fourniture d'un palier linéaire (108) comprenant un élément de palier en diamant polycristallin (100), dans lequel l'élément de palier en diamant polycristallin (100) présente une surface de palier en diamant polycristallin (102) ;
la fourniture d'un composant opposé (112) présentant une surface de palier opposée (114) sur celui-ci, dans lequel la surface de palier opposée (114) est une surface métallique comprenant un métal contenant au moins 2 % en poids de solvant-catalyseur du diamant par rapport au poids total du métal ; et
le couplage mobile du palier linéaire (108) avec le composant opposé (112) de sorte que la surface de palier en diamant polycristallin (102) vient en prise avec la surface de palier opposée (114) comprenant le métal qui contient le solvant-catalyseur du diamant.
